**Europäisches Patentamt**

**European Patent Office**

**Office européen des brevets**

(19)

(11) Veröffentlichungsnummer : **0 210 172**
**B1**

(12) **EUROPÄISCHE PATENTSCHRIFT**

(45) Veröffentlichungstag der Patentschrift :
**23.03.88**

(51) Int. Cl.⁴ : **B 65 G 57/28**

(21) Anmeldenummer : **85902498.6**

(22) Anmeldetag : **25.04.85**

(86) Internationale Anmeldenummer :
**PCT/EP 85/00187**

(87) Internationale Veröffentlichungsnummer :
**WO/8505090 (21.11.85 Gazette 85/25)**

(54) VORRICHTUNG ZUM STAPELN DÜNNWANDIGER FORMTEILE.

(30) Priorität : **03.05.84 DE 3416277**

(43) Veröffentlichungstag der Anmeldung :
**04.02.87 Patentblatt 87/06**

(45) Bekanntmachung des Hinweises auf die Patenterteilung : **23.03.88 Patentblatt 88/12**

(84) Benannte Vertragsstaaten :
**AT BE DE FR GB IT NL SE**

(56) Entgegenhaltungen :
**DE-A- 1 943 125**
**DE-A- 3 236 145**
**DE-A- 3 317 764**
**DE-B- 1 280 750**

(73) Patentinhaber : **Gerlach, Karl**
**Odenwaldstrasse 22**
**D-6096 Raunheim (DE)**

(72) Erfinder : **Gerlach, Karl**
**Odenwaldstrasse 22**
**D-6096 Raunheim (DE)**

(74) Vertreter : **Katscher, Helmut, Dipl.-Ing.**
**Bismarckstrasse 29**
**D-6100 Darmstadt (DE)**

EP 0 210 172 B1

## Beschreibung

Die Erfindung betrifft eine Vorrichtung zum Stapeln dünnwandiger Formteile, insbesondere großer Stanzteile aus Blech für den Automobilbau, bestehend aus einer Be- und Entladevorrichtung und mehreren Stapelbehältern, in denen Profilgreifstücke zur geordneten Aufnahme der Formteile angebracht sind, mit einem in einem Grundgestell längsverfahrbaren Greifwagen, der einen nach unten ragenden, senkrecht verfahrbaren Greifschlitten trägt.

Das Be- und Entladen dieser Stapelbehälter erfolgt bisher überwiegend von Hand. Dieser Vorgang ist mit großem Arbeitsaufwand Verbunden und bringt Verletzungsgefahren für die Arbeiter mit sich. Eine besondere Schwierigkeit liegt darin, daß die Arbeitsgeschwindigkeit moderner Stanzpressen so hoch ist, daß die gestanzten Formteile in schnellerer Taktfolge angeliefert werden, als sie in den Stapelbehälter eingebracht werden können.

Um das Be- und Entladen von Stapelbehältern zu erleichtern und zu beschleunigen, sind Stapelbehälter mit eingebauten Transportketten entwickelt worden, bei denen die Formteile nur am Aufgabeende des Stapelbehälters eingesetzt und dann von den Transportketten um jeweils einen Förderschritt weitergefördert werden. Der Bauaufwand ist hierbei für die einzelnen Stapelbehälter jedoch sehr hoch ; außerdem muß auch hierbei in den meisten Fällen eine manuelle Beschickung und Entnahme erfolgen.

Einer Mechanisierung des Be- und Entladevorganges stand bisher die besondere Schwierigkeit entgegen, daß die zu stapelnden Formteile, beispielsweise Karosserieteile im Automobilbau, in den meisten Fällen gegen Oberflächenbeschädigungen sehr empfindlich sind, so daß eine gegenseitige Berührung der Formteiloberflächen dadurch ausgeschlossen werden muß, daß die Formteile nicht nur im Stapelbehälter, sondern auch während des Be- und Entladens in einem vorgegebenen, jedoch möglichst geringen Abstand gehalten werden.

In einer bekannten Palettiervorrichtung (DE-A-3317764) können Blech-Stanzteile stehend aufgenommen werden. Hierfür sind aber an der Palette Ständer erforderlich, gegen die alle Stanzteile gemeinsam angelehnt werden müssen, so daß der erforderliche Abstand zwischen diesen Stanzteilen nicht eingehalten werden kann.

Bei einer bekannten Stapelvorrichtung (DE-B-1280750) werden auf einem Förderband liegende Dachsteine einzeln durch eine schwenkbare Stapelgabel aufgenommen und in stehender Anordnung zu einem Stapel zusammengestellt. Hierbei wird jedoch kein Abstand zwischen den einzelnen Teilen eingehalten, so daß Formteile mit empfindlicher Oberfläche nicht auf diese Weise gestapelt werden können. Ähnlich arbeitet eine andere bekannte Stapelvorrichtung für Dachsteine (DE-A-1943125), bei der bereits Einzelstapel auf einem Förderband ankommen, die dann geschwenkt und zu einem Paketstapel von stehenden Dachsteinen zusammengestellt werden. Ein Abstand zwischen den Dachsteinen wird nicht eingehalten.

Bei einer bekannten Vorrichtung (DE-A-32 36 145), die den Gattungsbegriff des Anspruchs 1 bildet, werden auf einem Förderband liegend herangeförderte Blech-Stanzteile für den Automobilbau einzeln durch Sauggreifer aufgenommen, geschwenkt, an einem Portal in Querrichtung verfahren und einzeln in einen Stapelbehälter von oben zwischen Abstandshalter eingeschoben. Wegen dieses aufwendigen Arbeitsablaufs ist die Arbeitsgeschwindigkeit der bekannten Vorrichtung geringer als für die Entsorgung einer schnelllaufenden Stanzpresse erforderlich.

Aufgabe der Erfindung ist es, eine Vorrichtung der eingangs genannten Gattung zu schaffen, die eine vollständig automatische und in Anpassung an die hohen Arbeitsgeschwindigkeiten moderner Stanzpressen sehr rasche Beladung von Stapelbehältern ermöglicht. Der Aufbau der Vorrichtung soll möglichst einfach und platzsparend sein ; auch der Aufbau des Stapelbehälters soll möglichst einfach sein. Sowohl die Stapelvorrichtung als auch die zugehörigen Stapelbehälter sollen rasch und mit geringem Arbeitsaufwand auf unterschiedliche Formteile umstellbar und somit universell einsetzbar sein. Die Stapelvorrichtung soll ohne konstruktive Änderungen allein durch unterschiedliche Steuerungen auch zum Beschicken anderer Stapelbehälter verwendet werden können ; sie soll ebenfalls ohne die Notwendigkeit konstruktiver Änderungen auch zum Entstapeln aus Stapelbehältern verwendbar sein.

Diese Aufgabe wird erfindungsgemäß dadurch gelöst, daß an dem Greifschlitten ein Schwenkträger um eine horizontale Schwenkachse schwenkbar gelagert ist, daß der Schwenkträger mindestens zwei gegenüberliegende, relativ zueinander bewegbare Profilgreifer aufweist und daß am Eine einer Längsfördereinrichtung eine Stapelstation angeordnet ist, die eine Hubeinrichtung für die Formteile und getrennt betätigbare seitliche Profilgreifer für mehrere im Abstand übereinander gestapelte Formteile aufweist.

Der Schwenkträger kann mit seinen Profilgreifern die flachliegend herangeförderten Formteile in geordneten Gruppen übernehmen. Der Schwenkträger bringt die Formteile in die gewünschte senkrechte Stellung und gibt sie im Stapelbehälter an der jeweils erforderlichen Stelle geordnet ab.

Durch die Stapelung mehrerer Formteile im Abstand übereinander wird eine besonders hohe Arbeitskapazität der Vorrichtung erreicht. Aus den in rascher Folge herangeförderten Formteilen wird in dieser Stapelstation eine Stapelgruppe gebildet, indem die einzelnen Formteile nacheinander angehoben und von den jeweils zugeordneten Profilgreifern festgehalten werden. Diese geordnete Stapelgruppe kann dann von den Profilgreifern des Schwenkträgers übernommen und in den Stapelbehälter gebracht werden. Für diesen Vorgang steht soviel Zeit zur Verfügung, wie für das Herstellen und Heranfördern der mehreren Formteile für die. Stapelgruppe benötigt wird. Wenn die Stapelgruppe aus vier Formteilen gebildet wird, steht für den Bewegungsablauf des Schwenkträgers die vierfache Taktzeit der Presse Zur Verfügung. Auf diese Weise ist der Stapelvorgang auch bei sehr rasch arbeitenden, modernen Stanzpressen ohne Schwierigkeiten durchführbar.

Eine noch weitere Erhöhung der Kapazität ist dadurch möglich, daß dieser Stapelstation eine weitere Stapelstation vorgeschaltet ist und daß ein Transportschlitten jeweils eine Gruppe von übereinander angeordneten Formteilen aus der ersten Stapelstation in die zweite Stapelstation transportiert.

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist. Es zeigt :

Fig. 1 eine Vorrichtung zum Stapeln dünnwandiger Formteile in einem Stapelbehälter in einer Seitenansicht,

Fig. 2 eine Teilansicht ähnlich der Fig. 2, wobei sich ein verfahrbarer Greifschlitten in seiner in den Stapelbehälter eingreifenden Stellung befindet, und

Fig. 3 eine Teil-Draufsicht in Richtung des Pfeiles III in Fig. 1.

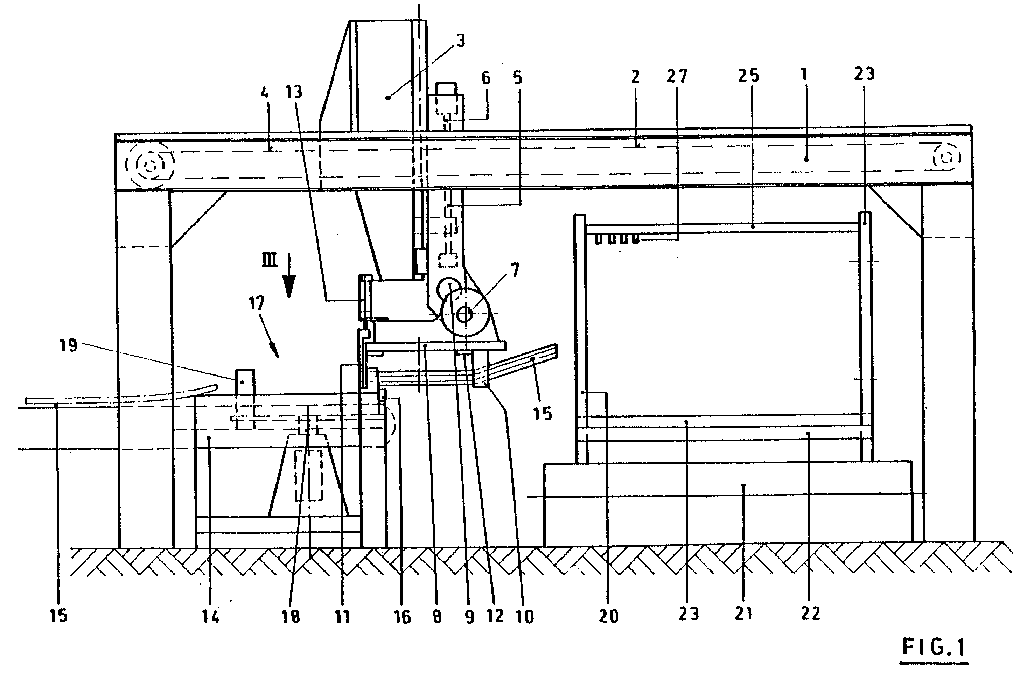

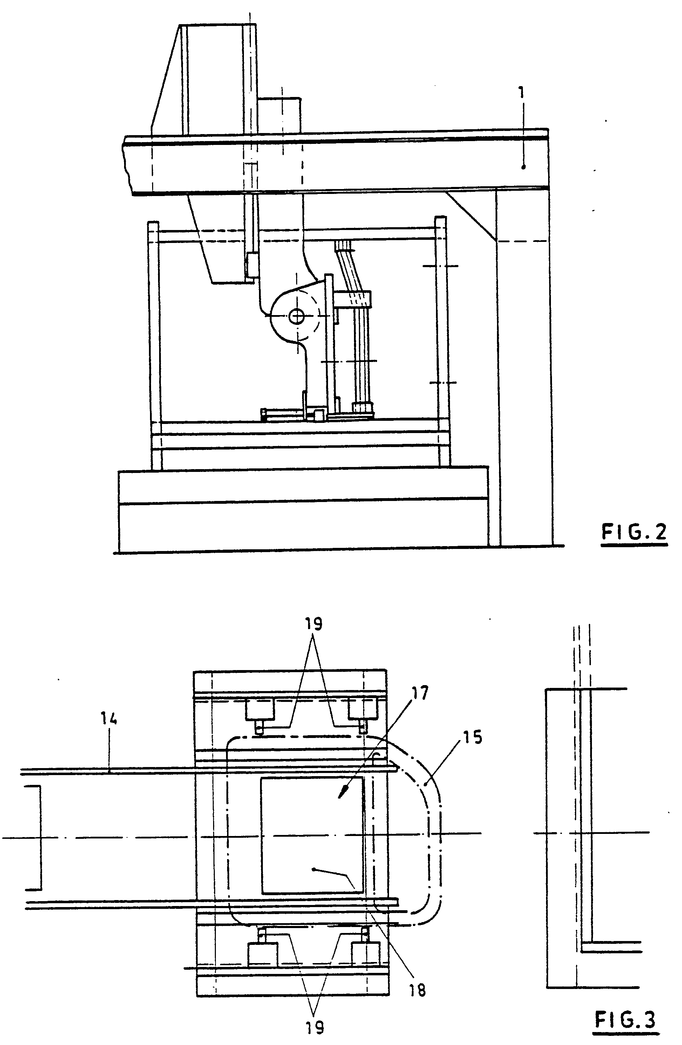

In einem portalartigen Grundgestell 1 (Fig. 1 und 2) ist längs eines oberen Portalträgers 2 ein Greifwagen 3 mittels einer in Fig. 1 nur schematisch als Antriebskette 4 angedeuteten Antriebseinrichtung verfahrbar. Am Greifwagen 3 ist ein Greifschlitten 5 in senkrechter Richtung verfahrbar, beispielsweise mittels eines in Fig. 1 nur angedeuteten Spindeltriebs 6.

Am unteren Ende des Greifschlittens 5 ist in einer horizontalen, quer zur Bewegungsrichtung des Greifwagens 3 verlaufenden Schwenkachse 7 ein Schwenkträger 8 schwenkbar gelagert. Als Schwenkantrieb dient beispielsweise ein Schrittmotor 9. Am Schwenkträger 8 sind zwei Paare von gegenüberliegenden Profilgreifern 10 und 11 angeordnet. Beim dargestellten Ausführungsbeispiel sind die oberen Profilgreifer 10 mittels eines Druckmittelzylinders 12 relativ zu den unteren Profilgreifern 11 verfahrbar. Die unteren Profilgreifer 11 sind mittels eines Druckmittelzylinders 13 senkrecht zum Schwenkträger 8 verfahrbar.

Am einen Ende ragt in das Grundgestell 1 das Ende einer Längsfördereinrichtung 14 hinein, die beispielsweise aus zwei parallen Förderketten besteht und auf der die zu fördernden Formteile 15, beim dargestellten Ausführungsbeispiel aus Blech bestehende Stanzteile für Automobiltüren, liegend in kurzer Taktfolge herangefördert werden. Ein Anschlag 16 hält die Formteile 15 in einer Stapelstation 17 am Ende der Längsfördereinrichtung 14 an. Dort werden die Formteile 15 durch eine Hubeinrichtung 18 einzeln angehoben und durch seitliche Profilgreifer 19 erfaßt (Fig.3). Mehrere Gruppen von Profilgreifern 19 sind in unterschiedlicher Höhenstellung angeordnet, so daß mehrere Formteile 15 in vorgegebenem Abstand übereinander in der Stapelstation 17 zwischen den Profilgreifern 19 aufgenommen werden können. Die auf diese Weise gebildete Stapelgruppe von Formteilen 15 wird vom Schwenkträger 8 zwischen seinen Profilgreifern 10 aufgenommen und in Richtung zu einem Stapelbehälter 20 transportiert, der auf einer Querverschiebebühne 21 innerhalb des Grundgestells 1 angeordnet und festgespannt ist.

Bei der Längsbewegung· des Greifwagens 3 wird der Schwenkträger 8 aus seiner in Fig. 1 gezeigten horizontalen Stellung in eine Stellung geschwenkt, in der die aufgenommenen Formteile 15 noch etwas schräg gegenüber der Senkrechten geneigt sind. In dieser Stellung verfährt der Greifwagen 3 die im Schwenkträger 8 aufgenommenen Formteile bis zu der vorgegebenen Stelle im Stapelbehälter 20.

Der Stapelbehälter 20 weist ein Rahmengestell 22 mit Eckpfosten 23 auf (Fig. 4). Am Rahmengestell 22 des Stapelbehälters 20 sind zwei untere längsverlaufende Aufnahmeleisten 23 vorgesehen, die an ihrer Oberseite eine Zahnung oder Kerbung aufweisen, die dazu dient, den unteren Rand der Formteile 15 zu halten.

Im Rahmengestell 22 sind zwei obere längsverlaufende Aufnahmeleisten 25 so im Abstand zueinander angeordnet, daß zwischen beiden Aufnahmeleisten 25 eine mindestens an einem, beim dargestellten Ausführungsbeispiel jedoch an beiden Behälterenden offene Gasse entsteht, in die der Greifschlitten 5 und der untere Teil des Greifwagens 6 unbehindert einfahren können.

In den oberen Aufnahmeleisten 25 ist jeweils eine Reihe von in senkrechter Richtung beweglichen Profilgreifstücken 27 angeordnet, die sich gegen eine Feder abstützen. Die Profilgreifstücke 27 weisen an ihrer Unterseite eine Profilkerbe auf, die zur Aufnahme des oberen Randes jeweils eines Formteiles 15 dient.

In der schon beschriebenen Weise werden die zu einer Stapelgruppe zusammengefaßten Formteile 15 vom Schwenkträger 8 so in den Stapelbehälter 20 gebracht, daß die einzelnen Formteile 15 mit ihrem oberen Rand jeweils ein Profilgreifstück 27 in den beiden Aufnahmeleisten 25 berühren. In dieser Position werden die zunächst noch schrägstehenden Formteile 15 in die senkrechte Stellung gebracht, beispielsweise indem der Schwenkträger 8 vollständig in die senkrechte Stellung schwenkt, oder indem die zunächst schräg am Schwenkträger 8 gehaltenen Formteile 15 durch eine Verschiebung der. unteren Profilgreifer 11 durch den Druckmittelzylinder 13 in die senkrechte Stellung geschwenkt werden. Dabei werden die Profilgreifstücke 27 gegen die Kraft der Feder angehoben, bis die Formteile 15 durch den Schwenkträger 8 in ihrer endgültigen Stellung auf den unteren Aufnahmeleisten 23 abgesetzt werden. Die einzelnen Formteile 15, die sich dann in ihrer vorgegebenen, geordneten Stapelstellung im Stapelbehälter 20 befinden, werden zwischen den oberen und unteren Aufnahmeleisten 23 und 25 gehalten. Der auf diese Weise gefüllte Stapelbehälter 20 kann durch eine Querverschiebung der Verschiebebühne 21 aus der Beschickungsposition herausbewegt und durch einen neuen, leeren Stapelbehälter 20 ersetzt werden.

Die gefüllten Stapelbehälter 20 können transportiert und gelagert werden, ohne daß sich die Stapelanordnung der Formteile 15 ändert. Um ein unbeabsichtigtes Anheben der Profilgreifstücke 27 zu verhindern, kann eine zusätzliche (nicht dargestellte) Sicherungsleiste vorgesehen werden, die ein Anheben der Formteile 15 und/oder der Profilgreifstücke 27 verhindert.

Abweichend von dem dargestellten Ausführungsbeispiel kann der Stapelstation 17 eine weitere Stapelstation vorgeschaltet sein, wobei ein Transportschlitten jeweils eine Gruppe von übereinander angeordneten Formteilen 15 aus der ersten Stapelstation in die zweite Stapelstation 17 transportiert, wobei diese bereits vorgestapelten Formteile 15 zwischen den seitlichen Profilgreifern 19 aufgenommen werden. In diesem Fall befindet sich die Hubeinrichtung 18 in der vorgeschalteten weiteren Stapelstation.

Die oberen und/oder unteren Aufnahmeleisten 25 bzw. 23 des Stapelbehälters 20 sind verstellbar und auswechselbar im Stapelbehälter 20 angeordnet, so daß dieser in einfacher Weise auf Formteile anderer Abmessungen umgestellt werden kann. Der Stapelbehälter 20 ist ebenso wie die gesamte beschriebene Vorrichtung universell einsetzbar. Die Be- und Entladevorrichtung kann ohne konstruktive Änderungen nur durch Änderung der Steuerbefehle für die beweglichen Teile beispielsweise auch eingesetzt werden, um die flachliegend herantransportierten Formteile 15 in den beschriebenen Stapelgruppen oder auch einzeln aufzunehmen und flachliegend in einen Behälter zu geben, der beispielsweise nur an seiner Oberseite eine Öffnung aufweist.

Mit der beschriebenen Vorrichtung können die Formteile aus dem dargestellten Stapelbehälter 20 oder einem anderen Behälter auch einzeln oder gruppenweise entnommen werden, um einer Weiterbearbeitungsstation zugeführt zu werden.

Da die Formteile jeweils in geordneter Anordnung in dem vorgegebenen gegenseitigen Abstand gehalten werden, besteht keine Gefahr, daß sich die Formteile 15 ineinander verkeilen.

Der Schwenkträger 8 kann eine Gruppe von zwei bis sechs oder sogar mehr Formteilen 15 gleichzeitig aufnehmen und in den Stapelbehälter 20 transportieren. Für den Antrieb des Greifwagens 3 kann an Stelle der Antriebskette 4 beispielsweise auch ein Zahnstangenantrieb verwendet werden.

**Patentansprüche**

1. Vorrichtung zum Stapeln dünnwandiger Formteile, insbesondere großer Stanzteile aus Blech für den Automobilbau, bestehend aus einer Be- und Entladevorrichtung und mehreren Stapelbehältern, in denen Profilgreifstücke zur geordneten Aufnahme der Formteile angebracht sind, mit einem in einem Grundgestell (1) längsverfahrbaren Greifwagen (3), der einen nach unten ragenden, senkrecht verfahrbaren Greifschlitten (5) trägt, dadurch gekennzeichnet, daß an dem Greifschlitten (5) ein Schwenkträger (8) um eine horizontale Schwenkachse (7) schwenkbar gelagert ist, daß der Schwenkträger (8) mindestens zwei gegenüberliegende, relativ zueinander bewegbare Profilgreifer (10, 11) aufweist und daß am Ende einer Längsfördereinrichtung (14) eine Stapelstation (17) angeordnet ist, die eine Hubeinrichtung (18) für die Formteile (15) und getrennt betätigbare seitliche Profilgreifer (19) für mehrere im Abstand übereinander gestapelte Formteile (15) aufweist.

2. Vorrichtung nach Anspruch 1, dadurch gekennzeichnet, daß die unteren oder oberen Profilgreifer (10, 11) senkrecht zu dem Schwenkträger (8) verschiebbar sind.

3. Vorrichtung nach Anspruch 2, dadurch gekennzeichnet, daß der Stapelstation (17) eine weitere Stapelstation vorgeschaltet ist und daß ein Transportschlitten jeweils eine Gruppe von übereinander angeordneten Formteilen (15) aus der ersten Stapelstation in die zweite Stapelstation (17) transportiert.

4. Vorrichtung nach Anspruch 1, dadurch gekennzeichnet, daß im Stapelbehälter (20) mindestens zwei obere und zwei untere längsverlaufende Aufnahmeleisten (25, 23) angeordnet sind und daß zwischen den beiden Aufnahmeleisten (25) eine mindestens an einem Behälterende offene Gasse zum Einfahren des Greifschlittens (5) Vorgesehen ist.

**Claims**

1. Device for stacking thin-walled parts, especially large sheet metal stampings for automobile construction, consisting of a loading and unloading device and several stacking containers, in which profile gripping parts for the ordered picking up of the parts are fitted, with a gripping trolley (3) which can be moved lengthwise in a basic frame (1), carrying a vertically movable gripping cradle (5) which projects downwards, characterised by the fact that a swinging beam (8) is fixed on the gripping cradle (5) in such a way that it can be turned about a horizontal rotation axis (17), that the swinging beam (8) has at least two profile grippers (10, 11) lying opposite each other, which can be moved relatively to each other, and that at the end of a longitudinal conveying device (14) a stacking station (17) is arranged, which has a lifting device (18) for the parts (15) and lateral profile grippers (19) which can be operated separately for several parts (15) stacked at intervals above each other.

2. Device according to Claim 1, characterised by the fact that the lower or upper profile grippers (10, 11) can be slid vertically to the swinging beam (8).

3. Device according to Claim 2, characterised by the fact that another stacking station is added to the stacking station (19) and that a transport cradle in each case carries a group of parts (15) arranged above each other from the first stacking station to the second stacking station (17).

4. Device according to Claim 1, characterised by the fact. that in the stacking container (20) at least two upper and two lower acceptance rails (25, 23) running lengthwise are arranged, and that between the two acceptance rails (25) a passage, open at at least one container end, is provided for the gripping cradle (5) to enter.

**Revendications**

1. Dispositif pour l'empilage de pièces usinées à paroi mince, en particulier, de grandes pièces estampées en tôle pour la construction de véhicules automobiles, ce dispositif comprenant un dispositif de chargement et de déchargement, ainsi que plusieurs récipients d'empilage dans lesquels sont disposés des éléments de préhension profilés pour recevoir les pièces usinées dans un ordre voulu, ce dispositif comportant également un chariot de préhension (3) pouvant effectuer un mouvement longitudinal dans un bâti de base (1) et supportant un curseur de préhension (5) ressortant vers le bas et pouvant se déplacer verticalement, caractérisé en ce que, sur le curseur de préhension (5), est monté un support articulé (8) pouvant pivoter sur un axe horizontal (7), en ce que le support articulé (8) comporte au moins deux éléments profilés de préhension (10, 11) se faisant face et pouvant se déplacer l'un par rapport à l'autre, et en ce que, à l'extrémité d'un dispositif de transport longitudinal (14), est installé un poste d'empilage (17) comportant un dispositif de levage (18) pour les pièces usinées (15), ainsi que des éléments latéraux profilés de préhension pouvant être actionnés, séparément pour plusieurs pièces usinées (15) empilées l'une au-dessus de l'autre à distance.

2. Dispositif selon la revendication 1, caractérisé en ce que les éléments profilés de préhension inférieurs ou supérieurs (10, 11) peuvent être déplacés perpendiculairement au support articulé (8).

3. Dispositif selon la revendication 2, caractérisé en ce que, en amont du poste d'empilage (17), est monté un autre poste d'empilage et en ce qu'un chariot transporteur transporte chaque fois un groupe de pièces usinées (15) superposées du premier poste d'empilage dans le deuxième poste d'empilage (17).

4. Dispositif selon la revendication 1, caractérisé en ce que, dans le récipient d'empilage (20), sont disposées au moins deux réglettes réceptrices supérieures et deux réglettes réceptrices inférieures s'étendant dans le sens longitudinal (25, 23) tandis que, entre les deux réglettes réceptrices (25), est prévue une voie ouverte au moins à une extrémité du récipient pour permettre l'introduction du curseur de préhension (5).

FIG.1

FIG.2

FIG.3